# EUROPEAN PATENT APPLICATION

(11) **EP 4 185 066 A1**
(43) Date of publication of application: **24.05.2023**
(21) Application number: 22208143.2
(22) Date of filing: 17.11.2022
(51) Int. Cl.: H04W 76/15, H04W 76/14, H04W 84/12, H04W 8/24, H04W 8/00, H04W 52/02, H04W 74/08

(54) **PERVASIVE EMLSR OPERATIONS IN WIRELESS COMMUNICATIONS**

(30) Priority: 18.11.2021 US 202163280638 P; 12.11.2022 US 202217985842
(71) Applicant: MediaTek Inc., Hsin-Chu 300 (TW)
(72) Inventor: CHANG, Cheng-Yi, 30078 Hsinchu City (TW)
(74) Representative: Hoefer & Partner Patentanwälte mbB

(57) **Abstract**

Techniques pertaining to performance enhancement between non-access point, non-AP, multi-link devices, MLDs, by enhanced multi-link single radio, EMLSR, in wireless communications are described. A first non-AP MLD exchanges EMLSR capability information with a second non-AP MLD in a handshake procedure on one of a plurality of links (1010). The first non-AP MLD then establishes an EMLSR operation with the second non-AP MLD on one or more links of the plurality of links (1020). Each of the first non-AP MLD and the second non-AP MLD listens on at least one of the plurality of links.

## Description

### CROSS REFERENCE TO RELATED PATENT APPLICATION

The present disclosure is part of a non-provisional patent application claiming the priority benefit of U.S. Provisional Patent Application No. 63/280,638, filed 18 November 2021, the content of which herein being incorporated by reference in its entirety.

### TECHNICAL FIELD

The present disclosure is generally related to wireless communications and, more particularly, to pervasive multi-link single radio (EMLSR) operations in wireless communications.

### BACKGROUND

Unless otherwise indicated herein, approaches described in this section are not prior art to the claims listed below and are not admitted as prior art by inclusion in this section.

In wireless communications in accordance with the Institute of Electrical and Electronics Engineers (IEEE) standards, such as Wi-Fi 7, EMLSR is expected to be a key operation mode for a given non-access point (non-AP) multi-link device (MLD). It is desirable to improve the latency and throughput for peer-to-peer (P2P) and tunneled direct link setup (TDLS) related applications. However, how the performance of a non-AP MLD may be enhanced in the context of P2P/TDLS-EMLSR remains to be specified. Therefore, there is a need for a solution of pervasive EMLSR operations in wireless communications to achieve performance enhancement between non-AP MLDs by EMLSR.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to performance enhancement between non-AP MLDs by EMLSR in wireless communications. Under various proposed schemes in accordance with the present disclosure, it is believed that an access point (AP) may avoid unnecessary reattempts at an unexpected link, as such reattempts end to cause unexpected packet drop and also reduce AP contention opportunities. It is also believed that, under various proposed schemes in accordance with the present disclosure, the performance may be enhanced by EMLSR between non-AP MLDs. Thus, it is believed that various schemes proposed herein may address or otherwise alleviate issue(s) described herein. A method and an apparatus according to the invention are defined in the independent claims. The dependent claims define preferred embodiments thereof.

In one aspect, a method may involve a first non-AP MLD exchanging EMLSR capability information with a second non-AP MLD in a handshake procedure on one of a plurality of links. The method may also involve the first non-AP MLD establishing an EMLSR operation with the second non-AP MLD on one or more links of the plurality of links. Each of the first non-AP MLD and the second non-AP MLD may listen on at least one of the plurality of links.

In another aspect, an apparatus implementable in a first non-AP MLD may include a transceiver configured to communicate wirelessly and a processor coupled to the transceiver. The processor may exchange, via the transceiver, EMLSR capability information with a second non-AP MLD in a handshake procedure on one of a plurality of links. The processor may also establish, via the transceiver, an EMLSR operation with the second non-AP MLD on one or more links of the plurality of links. Each of the first non-AP MLD and the second non-AP MLD may listen on at least one of the plurality of links.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (loT), Industrial loT (IIoT) and narrowband loT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various proposed schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a diagram of an example scenario under a proposed scheme in accordance with the present disclosure.
FIG. 5 is a diagram of an example scenario under a proposed scheme in accordance with the present disclosure.
FIG. 6 is a diagram of an example scenario under a proposed scheme in accordance with the present disclosure.
FIG. 7 is a diagram of an example scenario under a proposed scheme in accordance with the present disclosure.
FIG. 8 is a diagram of an example scenario under a proposed scheme in accordance with the present disclosure.
FIG. 9 is a block diagram of an example communication system in accordance with an implementation of the present disclosure.
FIG. 10 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to performance enhancement between non-AP MLDs by EMLSR in wireless communications. According to the present disclosure, a number of possible solutions may be implemented separately or jointly. That is, although these possible solutions may be described below separately, two or more of these possible solutions may be implemented in one combination or another.

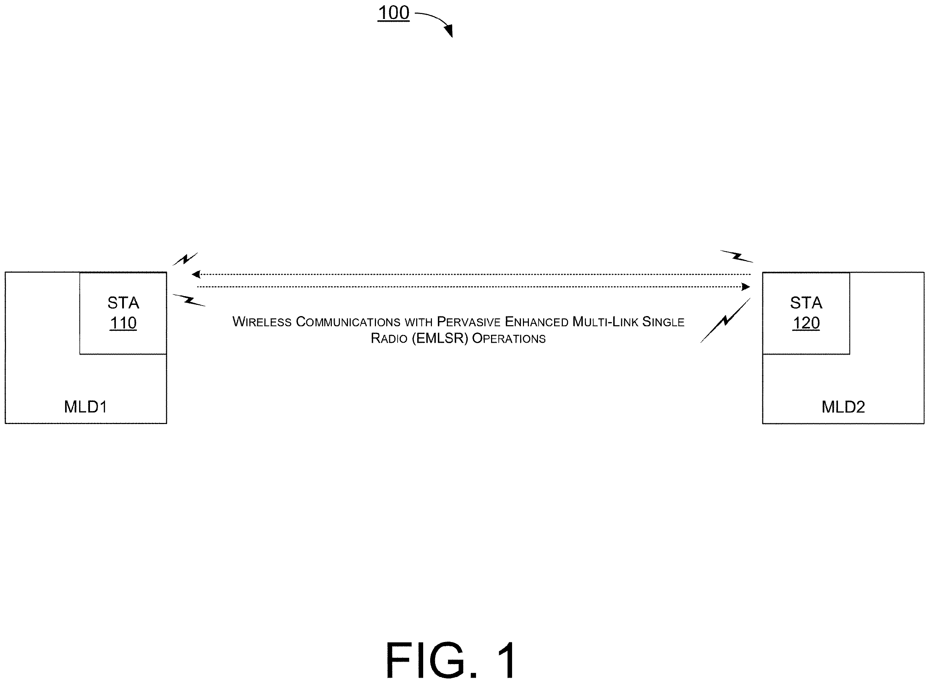

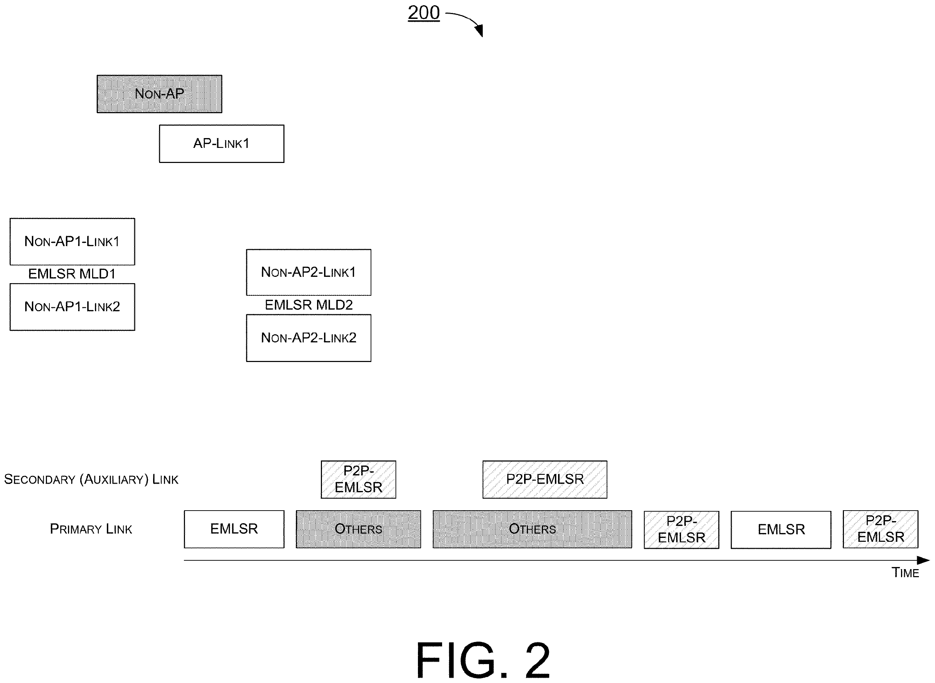

FIG. 1 illustrates an example network environment 100 in which various solutions and schemes in accordance with the present disclosure may be implemented. FIG. 2 ~ FIG. 10 illustrate examples of implementation of various proposed schemes in network environment 100 in accordance with the present disclosure. The following description of various proposed schemes is provided with reference to FIG. 1 ~ FIG. 10.

Referring to FIG. 1, network environment 100 may involve at least a first communication entity or station (STA) 110 communicating wirelessly with a second communication entity or STA 120. Each of STA 110 and STA 120 may be an access point (AP) STA or a non-AP STA, respectively. Each of STA 110 and STA 120 may be affiliated with a respective MLD capable of operating with EMLSR enabled. For instance, STA 110 may be affiliated with a first non-AP MLD (MLD1) and STA 120 may be affiliated with a second non-AP MLD (MLD2). In some cases, STA 110 and STA 120 may be associated with a basic service set (BSS) in accordance with one or more IEEE 802.11 standards (e.g., IEEE 802.11be and future-developed standards) such as Wi-Fi 7. Each of STA 110 and STA 120 may be configured to communicate with each other by utilizing the various proposed schemes described herein pertaining to performance enhancement between non-AP MLDs by EMLSR in wireless communications. It is noteworthy that, while the various proposed schemes may be individually or separately described below, in actual implementations each of the proposed schemes may be utilized individually or separately. Alternatively, some or all of the proposed schemes may be utilized jointly.

In P2P/TDLS EMLSR with respect to listening, detection and transmission, both first non-AP MLD and second non-AP MLD may be in a P2P communication and operating in the EMLSR mode. The two EMLSR non-AP MLDs may listen on two or more links and may switch to a same link when communication between the two EMLSR non-AP MLDs starts. This may also be applicable in other MLDs such as, for example, hybrid mode non-AP MLDs and/or non-simultaneous-transmission-and-reception (NSTR) non-AP MLDs. Compared with a single-link P2P scenario, the latency and throughput may be significantly improved in high-network load scenarios.

In various proposed schemes in accordance with the present disclosure, in an EMLSR operation between two EMLSR non-AP MLDs (referred to as "MLD1" and "MLD2" herein), initially both a first non-AP MLD (MLD1) and a second non-AP MLD (MLD2) may listen on a plurality of EMLSR-enabled links such as a first link (referred to as "link1" herein) and a second link (referred to as "link2" herein). Then, MLD1 may trigger its peer EMLSR non-AP MLD, or MLD2, for EMLSR communication. MLD1 may transmit a request-to-send (RTS), multi-user request-to-send (MU-RTS), buffer status report poll (BSRP), and/or power-saving poll (PS-Poll) on link1 as an initial physical-layer protocol data unit (PPDU) to trigger MLD2 for the EMLSR operation on link1. Upon detecting the RTS/MU-RTS/BSRP/PS-Poll on link1, MLD2 may respond with a clear-to-send (CTS), buffer status report (BSR), and/or acknowledgement (ACK) on link1. Accordingly, both MLD1 and MLD2 may switch to a link (e.g., link1) for EMLSR communication, including exchange of data and block acknowledgement (BA). That is, MLD1 may switch to link1 (thereby rendering MLD1 not capable of receiving data on link2) for the EMLSR communication when MLD1 transmits the RTS/MU-RTS/BSRP/PS-Poll, and MLD2 may switch to link1 (thereby rendering MLD2 not capable of receiving data on link2) for the EMLSR operation when MLD2 transmits the CTS/BSR/ACK. As a result, MLD1 and MLD2 cannot receive data at other EMLSR links (e.g., link2) during the EMLSR communication stage.

FIG. 2 illustrates an example scenario 200 under a proposed scheme with respect to non-AP EMLSR MLD operations such as P2P/TDLS in accordance with the present disclosure. Under the proposed scheme, EMLSR non-AP MLDs may enable a same link with an AP. For instance, each EMLSR non-AP MLD may listen, detect (e.g., to determine whether a peer STA is or is not communicating with other STA(s) on a primary link), and communicate at a secondary link (or auxiliary link) when the primary link is busy. In an even that no primary link is defined among a plurality of links, an EMLSR non-AP MLD may detect that other link(s) of the plurality of links are busy and that a peer MLD is not included in the links. Under the proposed scheme, with respect to capability handshakes, P2P/TDLS STAs may negotiate the EMLSR capabilities as well as the EMLSR link set to be used for EMLSR operation between the STAs. Moreover, with respect to medium access control (MAC) protocols, non-AP STAs may perform the EMLSR operation on an auxiliary (or secondary) link when the primary link is busy with the AP being transparent to the EMLSR operation on the auxiliary link. Additionally, non-AP STAs may also perform the EMLSR operation on the primary link with the AP being aware of it.

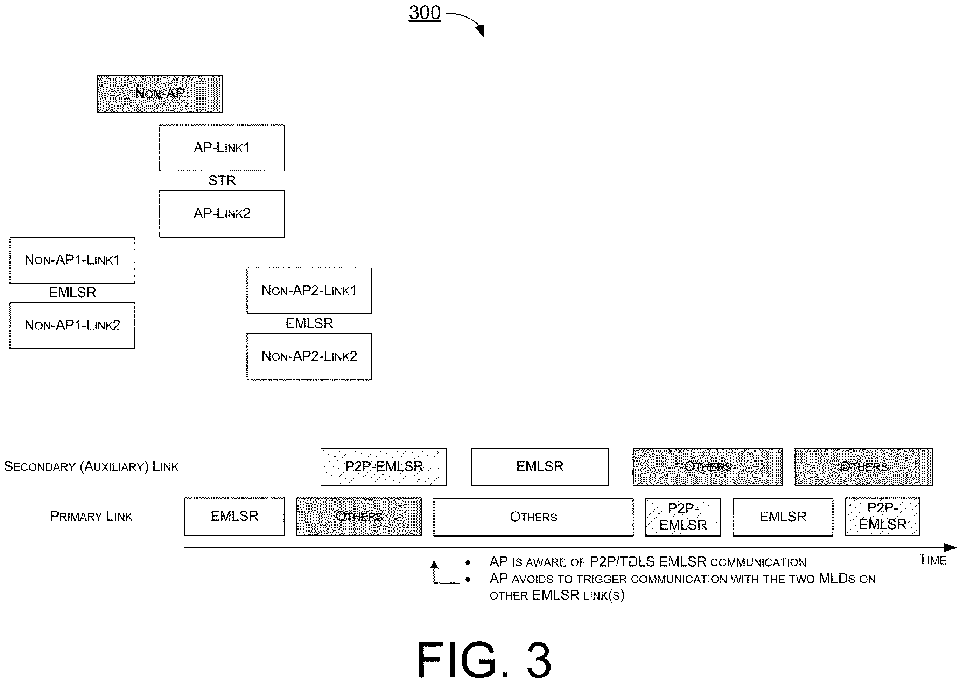

FIG. 3 illustrates an example scenario 300 under a proposed scheme in accordance with the present disclosure. Under the proposed scheme, the AP affiliated with an MLD may support the detection of P2P/TDLS EMLSR operation between EMLSR MLDs, and the AP MLD may be a be simultaneous-transmission-and-reception (STR) MLD. Moreover, the AP may be aware that a non-AP affiliated with another MLD is communicating (with another non-AP). As shown in FIG. 3, when a P2P (or TDLS) EMLSR communication between two non-AP MLDs occur on an auxiliary (or secondary) link while one or more other operations occur on the primary link between an AP and either or both of the two non-AP MLDs, the AP may be aware of the P2P (or TDLS) EMLSR communication on the auxiliary (or secondary) link and, accordingly, avoid to trigger any communication with the two non-AP MLDs on other EMLSR-enabled link(s), so as to reduce or minimize the initial trigger cost.

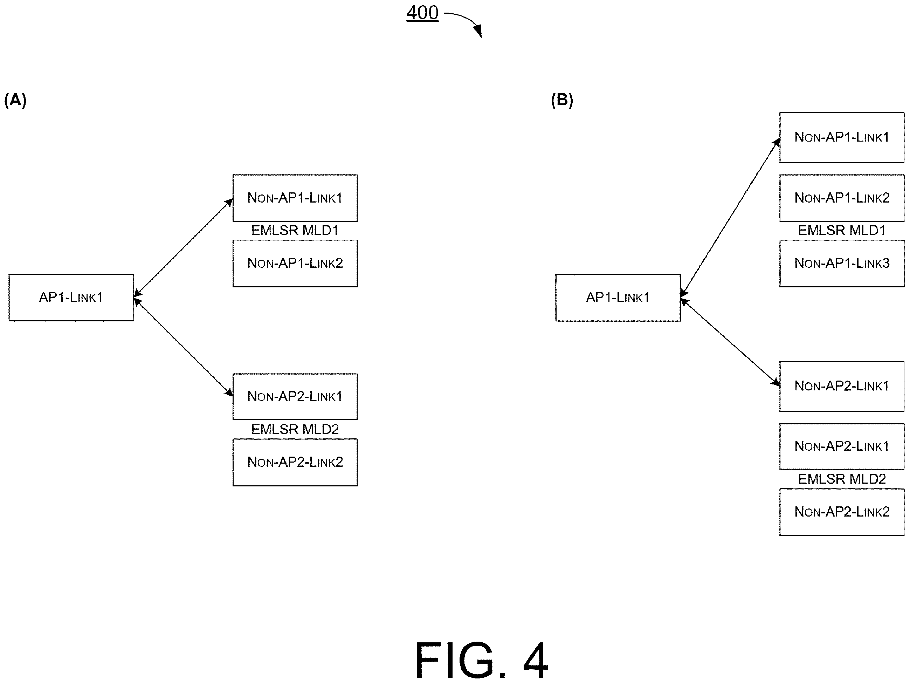

FIG. 4 illustrates an example scenario 400 under a proposed scheme with respect to capability handshake in accordance with the present disclosure. Under the proposed scheme, a handshake protocol may be utilized for a TDLS and/or P2P EMLSR operation. For instance, an EMLSR capability field may be added in a handshake flow (e.g., in a multi-link element, such as a TDLS multi-link element, or in a Peer-to-Peer Link Event Request sub-element). Alternatively, or additionally, EMLSR operational information (e.g., channel number) may be added in the handshake flow (e.g., in the TDLS multi-link element). The EMLSR links may not be limited by the links associated with the AP. Accordingly, it may be expected that at least one of the links may be associated with the AP for an EMLSR TDLS-enabled STA.

Referring to part (A) of FIG. 4, an AP may be associated with each of a first non-AP STA (non-AP1) and a second non-AP STA (non-AP2) on a first link (link1) among a plurality of links including the first link and a second link (link2). After handshake between non-AP1 and non-AP2, the two STAs may perform an EMLSR operation on link1 and link2. Referring to part (B) of FIG. 4, an AP may be associated with each of a first non-AP STA (non-AP1) of a first enhanced multi-link multiple radios (EMLMR) MLD (EMLMR MLD1) and a second non-AP STA (non-AP2) of a second EMLMR MLD (EMLMR MLD2) on a first link (link1) among a plurality of links including the first link, a second link (link2) and a third link (link3). For EMLMR MLD1, link1 and link2 may be STR links, link1 and link3 may be STR links, and link2 and link3 may be EMLSR links. For EMLSR MLD2, link1 and link2 may be STR links, link1 and link3 may be STR links, and link2 and link3 may be EMLSR links. After handshake between non-AP1 and non-AP2, the two STAs may perform an EMLSR operation on link2 and link3.

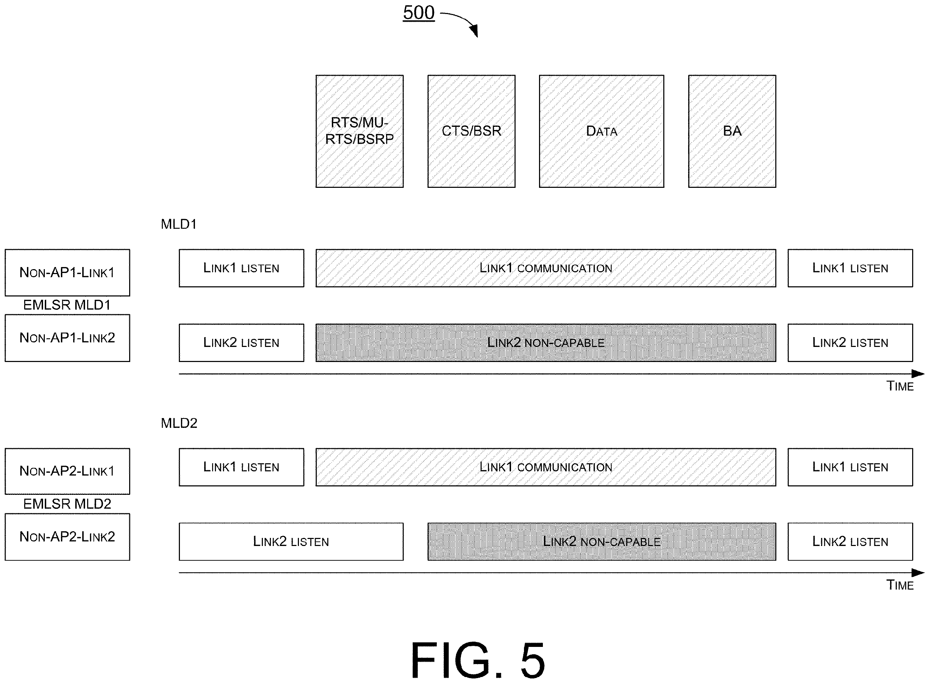

FIG. 5 illustrates an example scenario 500 under a proposed scheme with respect to EMLSR MAC protocol between non-AP MLDs in accordance with the present disclosure. Referring to FIG. 5, a first EMLSR non-AP MLD (MLD1) may trigger a peer EMLSR non-AP MLD (MLD2) for EMLSR communication. MLD1 and MLD2 may switch to a link with an initial PPDU transmitted for the EMLSR communication. MLD1 and MLD2 cannot receive data on other EMLSR links during the EMLSR communication stage. MLD1 may use MU-RTS/BSRP/RTS/PS-Poll as the initial PPDU to trigger MLD2 for an EMLSR operation. It is noteworthy that this may not be applicable for EMLSR between one AP MLD and another AP MLD.

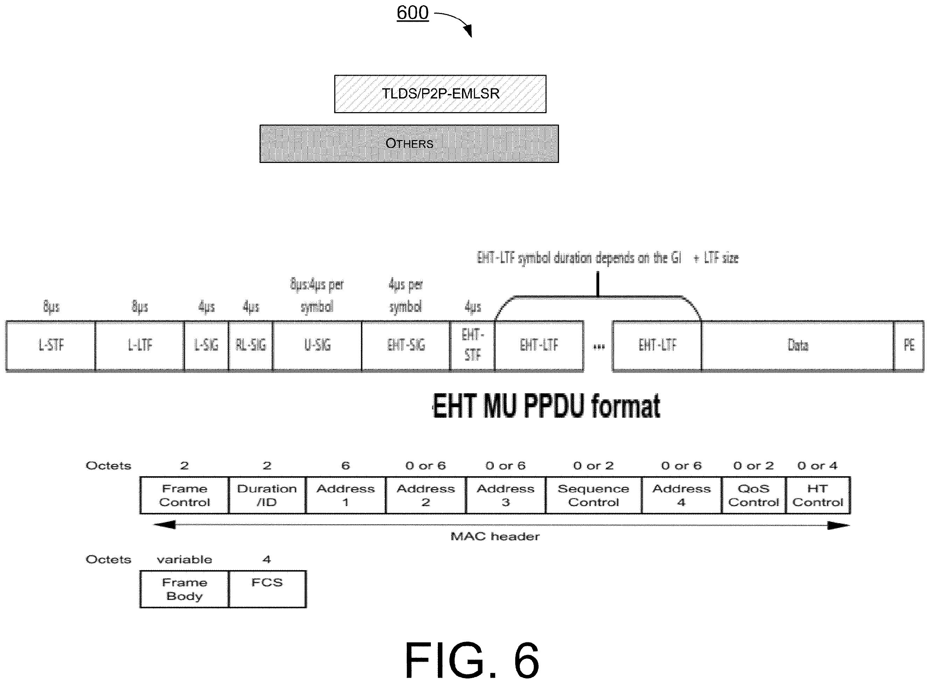

FIG. 6 illustrates an example scenario 600 under a proposed scheme with respect to EMLSR hitchhiking transmission-on-reception (Tx-on-Rx) in accordance with the present disclosure. Under the proposed scheme, an EMLSR MLD may detect that one or more links is/are busy and determine or otherwise obtain certain information. Under the proposed scheme, the EMLSR MLD may determine that a transmission on the one or more busy links as not being addressed or destined to the EMLSR MLD (not2me), not being addressed or destined to a peer EMLSR MLD (not2peer), and/or not being from the peer EMLSR MLD (notfrompeer). For instance, such determination of not2me/not2peer/notfrompeer may be based on detection in a preamble (e.g., in a HE-SIG-B field or EHT-SIG field) or MAC header (e.g., Address1 or Address2) in the PPDU. Moreover, under the proposed scheme, the EMLSR MLD may obtain the transmission opportunity (TXOP) and/or PPDU duration of the busy link(s). For instance, the TXOP/PPDU duration may be estimated based on the preamble in the PPDU. Additionally, under the proposed scheme, the EMLSR MLD may access an idle link with the duration constraints. Furthermore, under the proposed scheme, aforementioned constraints may be applied on certain links (e.g., primary link) of the EMLSR MLD to achieve transparency for the AP MLD (e.g., provide transparency regarding the EMLSR operation to the AP MLD so that the AP MLD is aware of it). For instance, the primary link or auxiliary links may be defined by the EMLSR MLD itself.

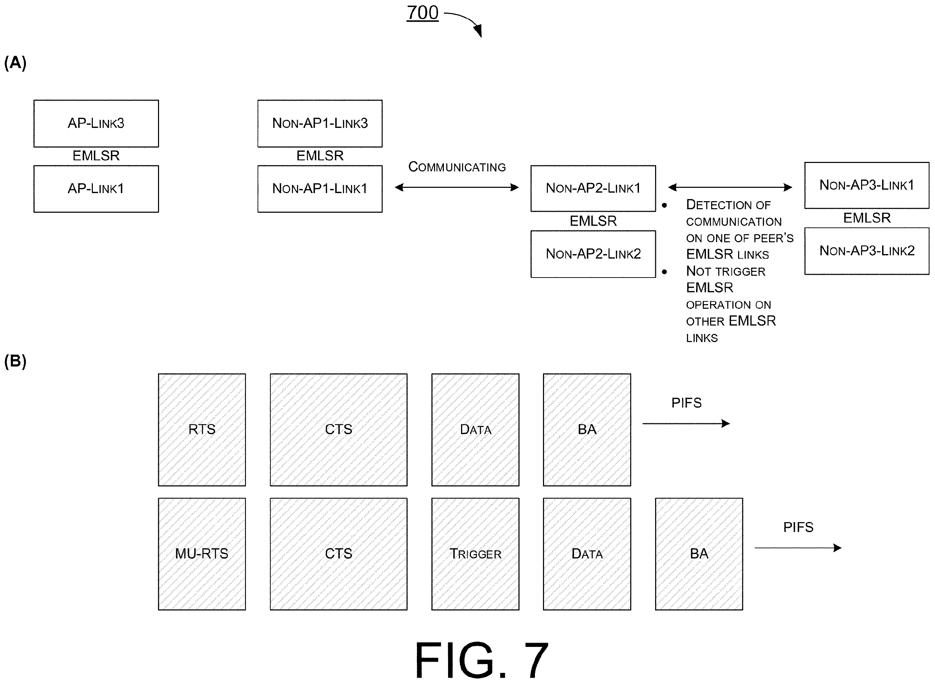

FIG. 7 illustrates an example scenario 700 under a proposed scheme with respect to detecting an EMLSR operation of a peer STA in accordance with the present disclosure. The detection of the EMLSR operation of the peer STA may be achieved in one or more of several ways described below. Under the proposed scheme, an EMLSR MLD may not trigger a peer MLD on another EMLSR link in an event that the EMLSR MLD received an RTS, MU-RTS, BSRP, PS-Poll or clear-to-send-to-self (CTS2self) with a transmitter address (TA) being the peer EMLSR MLD. Under the proposed scheme, upon receiving a CTS or an ACK with a receiver address (RA) for a hidden node, the EMLSR MLD may need to know the address of its peer's peer. For instance, an EMLSR element may be used to specify a link address of the peer's peer. It is noteworthy that it may be a false alarm in case the peer's peer is an AP. Under the proposed scheme, upon receiving a trigger frame with an association identifier (AID) being a peer's AID, the EMLSR MLD may require other information, such as BSS ID, to identify a target triggered STA. For instance, a protocol may be utilized to negotiate the AID and TA information. Under the proposed scheme, the EMLSR operation of the peer STA may be detected when it is detected that the peer STA is negotiating for other MAC address(es) for an EMLSR operation (e.g., in P2P mode) with its peer. For instance, a protocol may be utilized to negotiate the peer and peer's macAddress-set and/or AID on the EMLSR link(s). Part (A) of FIG. 7 pertains to detection of communication on one of a peer's EMLSR links (e.g., link1) and not triggering an EMLSR operation on other EMLSR links under the proposed scheme. Part (B) of FIG. 7 pertains to detecting TXOP end of a peer STA under the proposed scheme. Referring to part (B) of FIG. 7, when the peer's communication is detected, the EMLSR MLD may determine an end of a blocking EMLSR operation for the peer on other links in case that Point Coordination Function (PCF) inter-frame space (PIFS) idle is triggered.

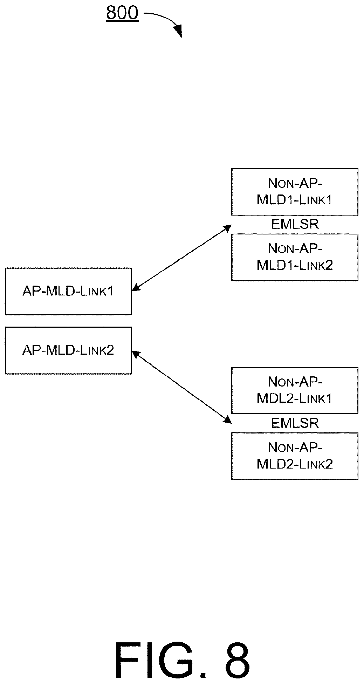

FIG. 8 illustrates an example scenario 800 under a proposed scheme with respect to transparency for an AP MLD in accordance with the present disclosure. Under the proposed scheme, transparency may be provided for an AP MLD when the AP MLD is a STR MLD and non-AP MLD1 and non-AP MLD2 are EMLSR MLDs associated with the AP MLD. Under the proposed scheme, when non-AP MLD1 and non-AP MLD2 intend to communicate via TDLS or P2P, non-AP MLD1 and non-AP MLD2 may notify each other and may set a power-save mode for the AP MLD at link1 or link2 concurrently. Moreover, non-AP MLD1 and non-AP MLD2 may perform hitchhiking Tx-on-Rx as described above on the power-save link with each other. Furthermore, non-AP MLD1 and non-AP MLD2 may disable the TDLS-EMLSR or P2P on the power-save link via negotiation frame(s), and non-AP MLD1 and non-AP MLD2 may notify the AP MLD to leave the power-save mode, respectively.

### Illustrative Implementations

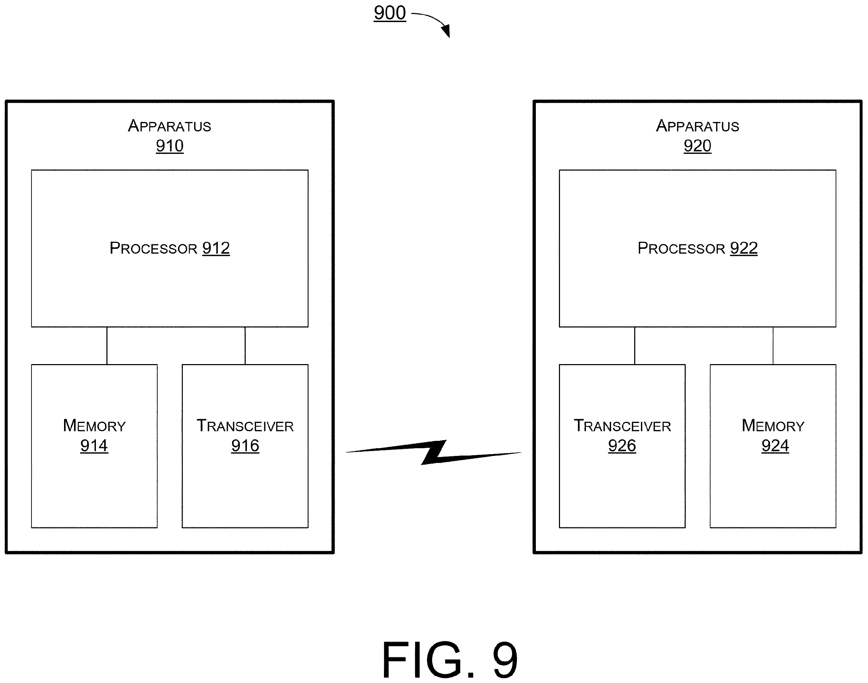

FIG. 9 illustrates an example system 900 having at least an example apparatus 910 and an example apparatus 920 in accordance with an implementation of the present disclosure. Each of apparatus 910 and apparatus 920 may perform various functions to implement schemes, techniques, processes and methods described herein pertaining to performance enhancement between non-AP MLDs by EMLSR in wireless communications, including the various schemes described above with respect to various proposed designs, concepts, schemes, systems and methods described above as well as processes described below. For instance, apparatus 910 may be implemented in STA 110 (or MLD1 operating as STA 110) and apparatus 920 may be implemented in STA 120 (or MLD2 operating as STA 120), or vice versa.

Each of apparatus 910 and apparatus 920 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 910 and apparatus 920 may be implemented in a smartphone, a smart watch, a personal digital assistant, a digital camera, or a computing equipment such as a tablet computer, a laptop computer or a notebook computer. Each of apparatus 910 and apparatus 920 may also be a part of a machine type apparatus, which may be an IoT apparatus such as an immobile or a stationary apparatus, a home apparatus, a wire communication apparatus or a computing apparatus. For instance, each of apparatus 910 and apparatus 920 may be implemented in a smart thermostat, a smart fridge, a smart door lock, a wireless speaker or a home control center. When implemented in or as a network apparatus, apparatus 910 and/or apparatus 920 may be implemented in a network node, such as an AP in a WLAN.

In some implementations, each of apparatus 910 and apparatus 920 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 910 and apparatus 920 may be implemented in or as a STA or an AP. Each of apparatus 910 and apparatus 920 may include at least some of those components shown in FIG. 9 such as a processor 912 and a processor 922, respectively, for example. Each of apparatus 910 and apparatus 920 may further include one or more other components not pertinent to the proposed scheme of the present disclosure (e.g., internal power supply, display device and/or user interface device), and, thus, such component(s) of apparatus 910 and apparatus 920 are neither shown in FIG. 9 nor described below in the interest of simplicity and brevity.

In one aspect, each of processor 912 and processor 922 may be implemented in the form of one or more single-core processors, one or more multi-core processors, one or more RISC processors or one or more CISC processors. That is, even though a singular term "a processor" is used herein to refer to processor 912 and processor 922, each of processor 912 and processor 922 may include multiple processors in some implementations and a single processor in other implementations in accordance with the present disclosure. In another aspect, each of processor 912 and processor 922 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 912 and processor 922 is a special-purpose machine specifically designed, arranged and configured to perform specific tasks including those pertaining to performance enhancement between non-AP MLDs by EMLSR in wireless communications in accordance with various implementations of the present disclosure.

In some implementations, apparatus 910 may also include a transceiver 916 coupled to processor 912. Transceiver 916 may include a transmitter capable of wirelessly transmitting and a receiver capable of wirelessly receiving data. In some implementations, apparatus 920 may also include a transceiver 926 coupled to processor 922. Transceiver 926 may include a transmitter capable of wirelessly transmitting and a receiver capable of wirelessly receiving data. It is noteworthy that, although transceiver 916 and transceiver 926 are illustrated as being external to and separate from processor 912 and processor 922, respectively, in some implementations, transceiver 916 may be an integral part of processor 912 as a system on chip (SoC) and/or transceiver 926 may be an integral part of processor 922 as a SoC.

In some implementations, apparatus 910 may further include a memory 914 coupled to processor 912 and capable of being accessed by processor 912 and storing data therein. In some implementations, apparatus 920 may further include a memory 924 coupled to processor 922 and capable of being accessed by processor 922 and storing data therein. Each of memory 914 and memory 924 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 914 and memory 924 may include a type of read-only memory (ROM) such as mask ROM, programmable ROM (PROM), erasable programmable ROM (EPROM) and/or electrically erasable programmable ROM (EEPROM). Alternatively, or additionally, each of memory 914 and memory 924 may include a type of non-volatile random-access memory (NVRAM) such as flash memory, solid-state memory, ferroelectric RAM (FeRAM), magnetoresistive RAM (MRAM) and/or phase-change memory.

Each of apparatus 910 and apparatus 920 may be a communication entity capable of communicating with each other using various proposed schemes in accordance with the present disclosure. For illustrative purposes and without limitation, a description of capabilities of apparatus 910, as STA 110, and apparatus 920, as STA 120, is provided below. It is noteworthy that, although a detailed description of capabilities, functionalities and/or technical features of apparatus 920 is provided below, the same may be applied to apparatus 910 although a detailed description thereof is not provided solely in the interest of brevity. It is also noteworthy that, although the example implementations described below are provided in the context of WLAN, the same may be implemented in other types of networks.

Under various proposed schemes pertaining to performance enhancement between non-AP MLDs by EMLSR in wireless communications in accordance with the present disclosure, with apparatus 910 implemented in or as a first non-AP MLD (e.g., MLD1) and apparatus 920 implemented in or as a second non-AP MLD (e.g., MLD2) in network environment 100 in accordance with one or more of IEEE 802.11 standards, processor 912 of apparatus 910 may exchange, via transceiver 916, EMLSR capability information with apparatus 920 in a handshake procedure on one of a plurality of links. Moreover, processor 912 may establish, via transceiver 916, an EMLSR operation with apparatus 920 on one or more links of the plurality of links. Each of apparatus 910 (as the first non-AP MLD) and apparatus 920 (as the second non-AP MLD) may listen on at least one of the plurality of links.

In some implementations, the EMLSR operation may be a P2P EMLSR operation or a TDLS EMLSR operation between the first non-AP MLD and the second non-AP MLD.

In some implementations, in exchanging the EMLSR capability information, processor 912 may exchange, in a handshake flow, EMLSR operational information or an EMLSR capability field, or both. Moreover, the EMLSR operational information may include a channel number. In some implementations, the EMLSR capability field may be in TDLS multi-link element or a P2P Link Event Request sub-element.

In some implementations, in establishing the EMLSR operation, processor 912 may perform certain operations. For instance, processor 912 may trigger the second non-AP MLD to perform an EMLSR communication on one or more of plurality of links. Additionally, processor 912 may switch to an available link of the plurality of links. In such cases, the first non-AP MLD and the second non-AP MLD may be unaware of activities on other links of the plurality of links after establishing the EMLSR operation between each other on the available link. In some implementations, in triggering, processor 912 may perform certain operations. For instance, processor 912 may transmit an initial frame such as an RTS, MU-RTS, BSRP or PS-Poll to the second non-AP MLD on the available link. Moreover, processor 912 may receive a solicited frame such as a CTS, BSR or ACK from the second non-AP MLD on the available link in response.

In some implementations, in establishing the EMLSR operation, processor 912 may detect link availability of each of the one or more links of the plurality of links to select the one of the plurality of links that is available for the EMLSR operation. In some implementations, in detecting link availability, processor 912 may detect a preamble or a MAC header of a PPDU transmitted on one of the plurality of links, as a given link is unavailable in an event that the PPDU transmitted on that link is from a peer device or to the peer device. Alternatively, or additionally, in detecting link availability, processor 912 may estimate a duration of either a TXOP or a PPDU transmitted on an unavailable link based on the information in the PPDU. In some implementations, in establishing the EMLSR operation, processor 912 may establish the EMLSR operation on the one of the plurality of links that is available considering the duration of the PPDU as a constraint. Alternatively, or additionally, in establishing the EMLSR operation, processor 912 may apply a duration constraint obtained from the estimating on the at least one link of the plurality of links on which the first non-AP MLD and/or the second non-AP MLD is or are associated with an AP MLD.

In some implementations, in establishing the EMLSR operation, processor 912 may perform one or more of the following: (a) notifying a power-save mode to the AP MLD on the at least one link of the plurality of links on which the first non-AP MLD is associated with the AP MLD; (b) detecting whether each of the one or more links of the plurality of EMLSR links is unavailable; and (c) performing a P2P EMLSR operation or a TDLS EMLSR operation on the at least one link on which the power-save mode is set for the AP MLD.

In some implementations, processor 912 may perform additional operations. For instance, processor 912 may detect one other EMLSR operation of the second non-AP MLD on a first link of the plurality of links. Moreover, processor 912 may refrain from triggering the second non-AP MLD for the EMLSR operation on one or more other links of the plurality of links. In some implementations, in detecting, processor 912 may receive an RTS, MU-RTS, BSRP, CTS2Self, and/or PS-Poll with a TA or a RA being the second non-AP MLD. Alternatively, or additionally, in detecting, processor 912 may receive a CTS or ACK with a RA being the second non-AP MLD or a peer STA of the second non-AP MLD. Alternatively, or additionally, in detecting, processor 912 may receive a trigger frame with an AID being that of the second non-AP MLD. Alternatively, or additionally, in detecting, processor 912 may detect a negotiation by the second non-AP MLD for another MAC address or an AID for the other EMLSR operation. Furthermore, processor 912 may determine an end of a blocking EMLSR operation for the second non-AP MLD on other links of the plurality of links in an event that PIFS idle is triggered.

In some implementations, in establishing the EMLSR operation, processor 912 may perform one or more of the following: (a) notifying a power-save mode to the AP MLD on the at least one link of the plurality of links on which the first non-AP MLD is associated with the AP MLD; (b) detecting whether each of the one or more links of the plurality of links is unavailable; and (c) performing a P2P EMLSR operation or a TDLS EMLSR operation on the at least one link on which the power-save mode is set for the AP MLD.

### Illustrative Processes

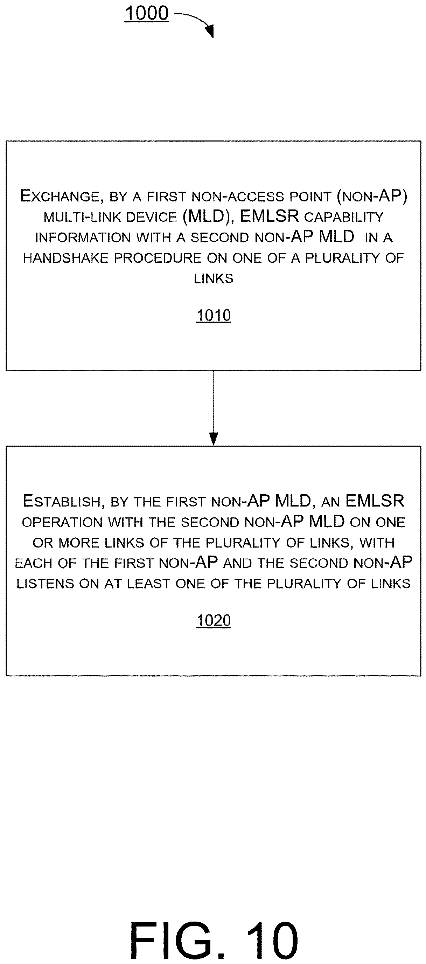

FIG. 10 illustrates an example process 1000 in accordance with an implementation of the present disclosure. Process 1000 may represent an aspect of implementing various proposed designs, concepts, schemes, systems and methods described above. More specifically, process 1000 may represent an aspect of the proposed concepts and schemes pertaining to performance enhancement between non-AP MLDs by EMLSR in wireless communications in accordance with the present disclosure. Process 1000 may include one or more operations, actions, or functions as illustrated by one or more of blocks 1010 and 1020. Although illustrated as discrete blocks, various blocks of process 1000 may be divided into additional blocks, combined into fewer blocks, or eliminated, depending on the desired implementation. Moreover, the blocks/sub-blocks of process 1000 may be executed in the order shown in FIG. 10 or, alternatively in a different order. Furthermore, one or more of the blocks/sub-blocks of process 1000 may be executed repeatedly or iteratively. Process 1000 may be implemented by or in apparatus 910 and apparatus 920 as well as any variations thereof. Solely for illustrative purposes and without limiting the scope, process 1000 is described below in the context of apparatus 910 implemented in or as a first non-AP MLD (e.g., MLD1) and apparatus 920 implemented in or as a second non-AP MLD (e.g., MLD2) in network environment 100 in accordance with one or more of IEEE 802.11 standards. Process 1000 may begin at block 1010.

At 1010, process 1000 may involve processor 912 exchanging, via transceiver 916, EMLSR capability information with apparatus 920 in a handshake procedure on one of a plurality of links. Process 1000 may proceed from 1010 to 1020.

At 1020, process 1000 may involve processor 912 establishing, via transceiver 916, an EMLSR operation with apparatus 920 on one or more links of the plurality of links. Each of apparatus 910 (the first non-AP MLD) and apparatus 920 (the second non-AP MLD) may listen on at least one of the plurality of links.

In some implementations, the EMLSR operation may be a P2P EMLSR operation or a TDLS EMLSR operation between the first non-AP MLD and the second non-AP MLD.

In some implementations, in exchanging the EMLSR capability information, process 1000 may involve processor 912 exchanging, in a handshake flow, EMLSR operational information or an EMLSR capability field, or both. Moreover, the EMLSR operational information may include a channel number. In some implementations, the EMLSR capability field may be in TDLS multi-link element or a P2P Link Event Request sub-element.

In some implementations, in establishing the EMLSR operation, process 1000 may involve processor 912 performing certain operations. For instance, process 1000 may involve processor 912 triggering the second non-AP MLD to perform an EMLSR communication on one or more of plurality of links. Additionally, process 1000 may involve processor 912 switching to an available link of the plurality of links. In such cases, the first non-AP MLD and the second non-AP MLD may be unaware of activities on other links of the plurality of links after establishing the EMLSR operation between each other on the available link. In some implementations, in triggering, process 1000 may involve processor 912 performing certain operations. For instance, process 1000 may involve processor 912 transmitting an initial frame such as an RTS, MU-RTS, BSRP or PS-Poll to the second non-AP MLD on the available link. Moreover, process 1000 may involve processor 912 receiving a solicited frame such as a CTS, BSR or ACK from the second non-AP MLD on the available link in response.

In some implementations, in establishing the EMLSR operation, process 1000 may involve processor 912 detecting link availability of each of the one or more links of the plurality of links to select the one of the plurality of links that is available for the EMLSR operation. In some implementations, in detecting link availability, process 1000 may involve processor 912 detecting a preamble or a MAC header of a PPDU transmitted on one of the plurality of links, as a given link is unavailable in an event that the PPDU transmitted on that link is from a peer device or to the peer device. Alternatively, or additionally, in detecting link availability, process 1000 may involve processor 912 estimating a duration of either a TXOP or a PPDU transmitted on an unavailable link based on the information in the PPDU. In some implementations, in establishing the EMLSR operation, process 1000 may involve processor 912 establishing the EMLSR operation on the one of the plurality of links that is available considering the duration of the PPDU as a constraint. Alternatively, or additionally, in establishing the EMLSR operation, process 1000 may involve processor 912 applying a duration constraint obtained from the estimating on the at least one link of the plurality of links on which the first non-AP MLD and/or the second non-AP MLD is or are associated with an AP MLD.

In some implementations, in establishing the EMLSR operation, process 1000 may involve processor 912 performing one or more of the following: (a) notifying a power-save mode to the AP MLD on the at least one link of the plurality of links on which the first non-AP MLD is associated with the AP MLD; (b) detecting whether each of the one or more links of the plurality of EMLSR links is unavailable; and (c) performing a P2P EMLSR operation or a TDLS EMLSR operation on the at least one link on which the power-save mode is set for the AP MLD.

In some implementations, process 1000 may involve processor 912 performing additional operations. For instance, process 1000 may involve processor 912 detecting one other EMLSR operation of the second non-AP MLD on a first link of the plurality of links. Moreover, process 1000 may involve processor 912 refraining from triggering the second non-AP MLD for the EMLSR operation on one or more other links of the plurality of links. In some implementations, in detecting, process 1000 may involve processor 912 receiving an RTS, MU-RTS, BSRP, CTS2Self, and/or PS-Poll with a TA or a RA being the second non-AP MLD. Alternatively, or additionally, in detecting, process 1000 may involve processor 912 receiving a CTS or ACK with a RA being the second non-AP MLD or a peer STA of the second non-AP MLD. Alternatively, or additionally, in detecting, process 1000 may involve processor 912 receiving a trigger frame with an AID being that of the second non-AP MLD. Alternatively, or additionally, in detecting, process 1000 may involve processor 912 detecting a negotiation by the second non-AP MLD for another MAC address or an AID for the other EMLSR operation. Furthermore, process 1000 may involve processor 912 determining an end of a blocking EMLSR operation for the second non-AP MLD on other links of the plurality of links in an event that PIFS idle is triggered.

In some implementations, in establishing the EMLSR operation, process 1000 may involve processor 912 performing one or more of the following: (a) notifying a power-save mode to the AP MLD on the at least one link of the plurality of links on which the first non-AP MLD is associated with the AP MLD; (b) detecting whether each of the one or more links of the plurality of links is unavailable; and (c) performing a P2P EMLSR operation or a TDLS EMLSR operation on the at least one link on which the power-save mode is set for the AP MLD.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method of an enhanced multi-link single radio, in the following also referred to as EMLSR, operation, comprising:
exchanging, by a first non-access point, in the following also referred to as non-AP, multi-link device, in the following also referred to as MLD, EMLSR capability information with a second non-AP MLD in a handshake procedure on one of a plurality of links (1010); and
establishing, by the first non-AP MLD, an EMLSR operation with the second non-AP MLD on one or more links of the plurality of links,
wherein each of the first non-AP MLD and the second non-AP MLD listens on at least one of the plurality of links (1020).

2. The method of Claim 1, wherein the EMLSR operation is a peer-to-peer, in the following also referred to as P2P, EMLSR operation or a tunneled direct link setup, in the following also referred to as TDLS, EMLSR operation between the first non-AP MLD and the second non-AP MLD.

3. The method of Claim 1 or 2, wherein the exchanging of the EMLSR capability information comprises exchanging, in a handshake flow, EMLSR operational information or an EMLSR capability field, or both.

4. The method of Claim 3, wherein the EMLSR capability field is in a tunneled direct link setup, in the following also referred to as TDLS, multi-link element or a peer-to-peer, in the following also referred to as P2P, Link Event Request sub-element.

5. The method of any one of Claims 1 to 4, wherein the establishing of the EMLSR operation comprises:
triggering the second non-AP MLD to perform an EMLSR communication on one or more of the plurality of links; and
switching to an available link of the plurality of links,
wherein the first non-AP MLD and the second non-AP MLD are unaware of activities on other links of the plurality of links after establishing the EMLSR operation between each other on the available link.

6. The method of Claim 5, wherein the triggering comprises:
transmitting an initial frame comprising a request-to-send (RTS), multi-user request-to-send, in the following also referred to as MU-RTS, buffer status report poll, in the following also referred to as BSRP, or power-saving poll, in the following also referred to as PS-Poll,I to the second non-AP MLD on the available link; and
receiving a solicited frame such as a clear-to-send, in the following also referred to as CTS, buffer status report, in the following also referred to as BSR, or acknowledgement, in the following also referred to as ACK, from the second non-AP MLD on the available link in response.

7. The method of any one of Claims 1 to 6, wherein the establishing of the EMLSR operation comprises detecting link availability of each of the one or more links of the plurality of links to select the one of the plurality of links that is available for the EMLSR operation.

8. The method of Claim 7, wherein the detecting of link availability comprises detecting a preamble or a medium access control, in the following also referred to as MAC, header of a physical-layer protocol data unit, in the following also referred to as PPDU, transmitted on one of the plurality of links, and wherein a link is unavailable in an event that the PPDU transmitted on that link is from a peer device or to the peer device; and/or
wherein the detecting of link availability comprises estimating a duration of either a transmission opportunity, in the following also referred to as TXOP, or a PPDU transmitted on an unavailable link based on the information in the PPDU.

9. The method of Claim 9, wherein the establishing of the EMLSR operation comprises establishing the EMLSR operation on the one of the plurality of links that is available considering the duration of the PPDU as a constraint; and/or
wherein the establishing of the EMLSR operation comprises applying a duration constraint obtained from the estimating on the at least one link of the plurality of links on which the first non-AP MLD or the second non-AP MLD, or both, is or are associated with an access point, in the following also referred to as AP, MLD.

10. The method of Claim 9, wherein the establishing of the EMLSR operation comprises performing one or more of:
notifying a power-save mode to an AP MLD on the at least one link of the plurality of EMLSR links on which the first non-AP MLD is associated with the AP MLD;
detecting whether each of the one or more links of the plurality of EMLSR links is unavailable; and
performing a P2P EMLSR operation or a TDLS EMLSR operation on the at least one link on which the power-save mode is set for the AP MLD.

11. The method of any one of Claims 1 to 10, further comprising:
detecting, by the first non-AP MLD, one other EMLSR operation of the second non-AP MLD on a first link of the plurality of links; and
refraining from triggering the second non-AP MLD for the EMLSR operation on one or more other links of the plurality of links.

12. The method of Claim 11, wherein the detecting comprises receiving a RTS, MU-RTS, BSRP, clear-to-send-to-self, in the following also referred to as CTS2Self, or PS-Poll with a transmitter address, in the following also referred to as TA, or a receiver address, in the following also referred to as RA, being the second non-AP MLD; and/or
wherein the detecting comprises receiving a CTS or ACK with a RA being the second non-AP MLD or a peer station, in the following also referred to as STA, of the second non-AP MLD; and/or
wherein the detecting comprises receiving a trigger frame with an association identifier, in the following also referred to as AID, being that of the second non-AP MLD; and/or
wherein the detecting comprises detecting a negotiation by the second non-AP MLD for another MAC address or an AID for the other EMLSR operation.

13. The method of Claim 11 or 12, further comprising:
determining, by the first non-AP MLD, an end of a blocking EMLSR operation for the second non-AP MLD on other links of the plurality of links in an event that Point Coordination Function, in the following also referred to as PCF, inter-frame space, in the following also referred to as PIFS, idle is triggered.

14. The method of any one of Claims 1 to 13, wherein the establishing of the EMLSR operation comprises performing one or more of:
notifying a power-save mode to an AP MLD on the at least one link of the plurality of links on which the first non-AP MLD is associated with the AP MLD;
detecting whether each of the one or more links of the plurality of links is unavailable; and
performing a P2P EMLSR operation or a TDLS EMLSR operation on the at least one link on which the power-save mode is set for the AP MLD.

15. An apparatus implementable in a first non-access point (910), in the following also referred to as non-AP, multi-link device, in the following also referred to as MLD, comprising:
a transceiver (916) configured to communicate wirelessly; and
a processor (912) coupled to the transceiver (916) and configured to perform operations comprising:
exchanging, via the transceiver (916), enhanced multi-link single radio, in the following also referred to as EMLSR, capability information with a second non-AP MLD (920) in a handshake procedure on one of a plurality of links; and
establishing, via the transceiver (916), an EMLSR operation with the second non-AP MLD (920) on one or more links of the plurality of links,
wherein each of the first non-AP MLD (910) and the second non-AP MLD (920) listens on at least one of the plurality of links.
